# EUROPÄISCHE PATENTSCHRIFT

(11) **EP 0 467 194 B1**
(45) Veröffentlichungstag und Bekanntmachung des Hinweises auf die Patenterteilung: **08.11.1995**
(21) Anmeldenummer: 91111378.5
(22) Anmeldetag: 09.07.1991
(51) Int. Cl.: C01B 13/32, C01G 19/02, C01G 3/02, C01G 9/02

(54) **Verfahren zur Herstellung von Metalloxidpulver**
Process for the preparation of metal oxide powder
Procédé pour la préparation de poudre d'oxyde métallique

(30) Priorität: 21.07.1990 DE 4023278
(43) Veröffentlichungstag der Anmeldung: 22.01.1992
(73) Patentinhaber: MESSER GRIESHEIM GMBH, D-60270 Frankfurt (DE)
(72) Erfinder: Gross, Gerhard, Dr., W-4156 Willich 4 (DE); Leinberger, Klaus, W-4156 Willich 1 (DE); Vetter, Johannes, Dr., W-4156 Willich 2 (DE)

(56) Entgegenhaltungen:
- FR-A- 1 414 313
- CHEMICAL ABSTRACTS, vol. 90, no. 26, Juni 1979, Columbus, Ohio, US; abstract no. 206682R, ISHIGAKI 'oxide production ' Seite 162
- CHEMICAL ABSTRACTS, vol. 99, no. 24, 1983, Columbus, Ohio, US; abstract no. 197370U, VESSANI 'mettallic oxide production ' Seite 134 ;

## Beschreibung

Die vorliegende Erfindung betrifft ein Verfahren zur Herstellung von Metalloxidpulvern, z. B. Pulver der Metalloxide Zinnoxid, Zinkoxid, Titanoxid, Bleioxid, Kupferoxid.

Zinnoxidpulver wird als weißer Farbgrundstoff für Glasuren und Emaillen verwendet, da es von Wasser, Säuren und Alkalilaugen nicht angegriffen wird. Außerdem ist es thermisch sehr widerstandsfähig (Sublimationspunkt ≧ 1.800 °C).

Bekanntgeworden ist die Herstellung von Zinnoxidpulver in zwei Schritten, und zwar die Herstellung von Zinnpulver in einem ersten Schritt und danach in einem zweiten Schritt die getrennte Oxidation des Zinnpulvers in einem Ofen. Dabei wird das Zinnpulver im Ofen, z. B. Drehtrommelofen, auf Reaktionstemperatur erhitzt und durch Zugabe von Luft oxidiert. Der Oxidationsprozess ist langsam und mit einem hohen Energieeinsatz zum Betreiben des Ofens verbunden.

Ein Verfahren zur Oxidierung von Blei ist aus FR-A-14 14 313 bekannt.

Aufgabe der vorliegenden Erfindung ist es, ein einfaches Verfahren zur Metalloxidpulverherstellung zur Verfügung zu stellen.

Diese Aufgabe wird gemäß den Merkmalen des Anspruchs 1 gelöst. Durch die Erfindung wird es somit möglich, in einem einzigen Schritt sowohl die Metallpulverherstellung und auch die Oxidation des Metallpulvers durchzuführen, so daß in besonders einfacher Weise das Metalloxid in Pulverform entsteht.

Weitere vorteilhafte Verfahrensmerkmale sind in den Ansprüchen 2 bis 6 angegeben.

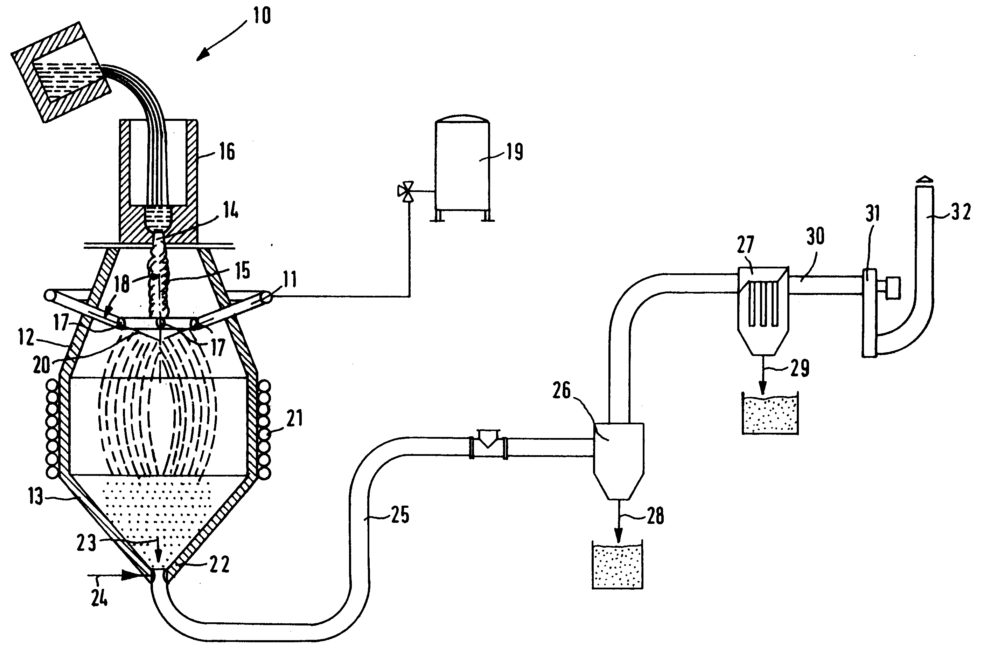

In der Zeichnung ist eine Schmelzvorrichtung mit 10, eine Zerstäubungsvorrichtung mit 11, eine der Zerstäubungsvorrichtung 11 zugeordnete und mit der Schmelzvorrichtung 10 verbundene Brennkammer mit 12 sowie ein am Ende der Brennkammer 12 angeordneter Auffangtrichter mit 13 gekennzeichnet.

In der Schmelzvorrichtung 10 wird auf ca. 900°C bis 1200°C überhitztes Zinn durch einen Auslauf 14 auf einen Durchmesser von 1 bis 10 mm geformt und fällt als Metallstrahl 15 in die Brennkammer 12. Das Zinn wird dabei entweder in einem separaten Ofen geschmolzen und in den Tundish 16 abgegossen oder direkt in dem als Ofen ausgebildeten Tundish geschmolzen und überhitzt.

Die Zerstäubungsvorrichtung 11 weist eine Ringspaltdüse oder mehrere konzentrisch angeordnete Einzeldüsen 17 mit fest vorgegebenem Anstellwinkel 18 auf und ist ferner an eine Sauerstoffversorgung, z. B. einen Hochdrucksauerstofftank 19, angeschlossen.

Der Sauerstoff wird unter Druck und hoher Geschwindigkeit durch die Düsen 17 auf den Metallstrahl 15 gespritzt, wobei der aus den Düsen 17 austretende Sauerstoffstrahl 20 und der lotrecht nach unten ausfließende Metallstrahl 15 einen Winkel 18 bilden, der kleiner als ein rechter Winkel ist.

Der flüssige Sauerstoff wird bevorzugt mit einem Druck zwischen 5 und 100 bar durch die divergent ausgebildeten Düsen ausgeblasen. Bei Verwendung einer Ringspaltdüse kann zusätzlich der Sauerstoff mit einem Drall austreten.

Bei diesem Druckbereich ist keine Pumpe zur Förderung notwendig. Der Sauerstoff kann direkt aus dem Hochdrucksauerstofftank 19 entnommen werden.

Der Winkel 18 zwischen dem Metallstrahl 15 und dem Sauerstoffstrahl 20 liegt bevorzugt zwischen 50° und 85°. Durch den hohen Impuls des auftreffenden Sauerstoffs wird die Metallschmelze zu feinen Partikeln zerstäubt und gleichzeitig das Zinn oxidiert.

Diese Reaktion ist stark exotherm. Das Zinn verbrennt mit weißer, heller Flamme. Es entsteht ein feines, unregelmäßig geformtes, weißes SnO₂-Pulver. Ein vorzugsweise mit Wasser gekühlter Mantel 21 kühlt die Brennkammer 12 und führt die Reaktionswärme (ΔH = - 1161 Kcal/kg Sn) ab.

Der Sauerstoffbedarf entspricht mindestens der stöchiometrischen Menge von 0,377 m³ O₂/kg Sn, wobei bevorzugt reiner Sauerstoff verwendet wird. Es ist jedoch auch möglich, ein die erforderliche Sauerstoffmenge aufweisendes Gemisch, vorzugsweise Sauerstoff-Inertgasgemisch zu verwenden, wobei bevorzugt ein flüssiges Sauerstoff-Argon-Gemisch oder Sauerstoff-Stickstoff-Gemisch verwendet wird.

Das Abgasvolumen entspricht dem Sauerstoff bzw. Inertgasüberschuß, denn das durch die Reaktion gebildete Zinnoxidpulver ist fest.

Das feste Zinnoxidpulver lagert sich im Auffangtrichter 13 ab und wird über einen vorzugsweise am Ausgang 22 des Trichters 13 angebrachten Injektor 23, dem über eine Leitung 24 Luft oder ein Inertgas zugeführt wird und die Leitung 25 einem Zyklon 26 und einem diesen nachgeschalteten Filter 27 weitertransportiert.

Dem Zyklon 26 und dem Filter 27 wird über Leitungen 28 bzw. 29 das Zinnoxidpulver entnommen. Die Luft- bzw. Inertgaszufuhr dient dabei neben der Pulverforderung bei der Verwendung von reinem Sauerstoff als Reagens, auch zum Verdünnen des Sauerstoffs im Abgassystem, wodurch sichergestellt ist, daß kein Brand in dem Abgassystem entsteht.

Der Ausgang 30 des Filters 27 steht unter Zwischenschaltung eines Sauggebläses 31 mit einem Abluftkamin 32 in Verbindung.

## Patentansprüche

1. Verfahren zur Herstellung von Metalloxidpulvern, bei dem in einem Arbeitsgang durch Sauerstoff (20) die vorzugsweise als Metallstrahl (15) vorliegende Metallschmelze zerstäubt und gleichzeitig die entstehenden Metallpartikel oxidiert werden,
dadurch gekennzeichnet,
daß flüssiger Sauerstoff oder ein flüssiges Sauerstoff-Gemisch verwendet wird.

2. Verfahren nach Anspruch 1,
dadurch gekennzeichnet,
daß Sauerstoff unter einem Druck von mehr als 5 bar durch eine oder mehrere auf den Metallstrahl (15) gerichtete Düsen (17) gespritzt wird, wobei ein aus einer Düse (17) austretender Sauerstoffstrahl (30) und der lotrecht nach unten aus einer Schmelzkammer (16) ausfließende Metallstrahl (15) einen Winkel (18) miteinander bilden, der kleiner als ein rechter Winkel ist.

3. Verfahren nach Anspruch 1 oder 2,
dadurch gekennzeichnet,
daß Sauerstoff (20) mit einem Druck von 5 bis 100 bar auf den Metallstrahl (15) gespritzt wird.

4. Verfahren nach einem der Ansprüche 1 bis 3,
dadurch gekennzeichnet,
daß die Sauerstoffmenge mindestens der stöchiometrischen, zur Oxidation notwendigen, Menge entspricht.

5. Verfahren nach einem der Ansprüche 1 bis 4,
dadurch gekennzeichnet,
daß die bei der exothermen Metall-O₂-Reaktion entstehende Wärme, vorzugsweise durch eine Wasserkühlung (21), abgeführt wird.

6. Verfahren nach einem der Ansprüche 1 bis 5,
dadurch gekennzeichnet,
daß Metalloxidpulver, vorzugsweise in einem Trichter (13), aufgefangen und durch ein Gas (24) weitertransportiert wird.

## Claims

1. Process for the production of metal oxide powders in which, in one operation, the metal melt preferentially present as a metal jet (15) is atomized by oxygen (20) and simultaneously the metal particles formed are oxidized, characterized in that liquid oxygen or a liquid oxygen mixture is used.

2. Process according to Claim 1, characterized in that oxygen is injected at a pressure of more than 5 bar through one or more nozzles (17) directed towards the metal jet (15), an oxygen jet (30) exiting from a nozzle (17) and the metal jet (15) flowing out vertically downwards from a melt chamber (16) forming an angle (18) to each other which is smaller than a right angle.

3. Process according to Claim 1 or 2, characterized in that the oxygen (20) is injected at a pressure of 5 to 100 bar on to the metal jet (15).

4. Process according to one of Claims 1 to 3, characterized in that the amount of oxygen corresponds to at least the stoichiometric amount required for the oxidation.

5. Process according to one of Claims 1 to 4, characterized in that the heat resulting in the exothermic metal-O₂ reaction is conducted away, preferentially by a water cooler (21).

6. Process according to one of Claims 1 to 5, characterized in that metal oxide powder is collected preferentially in a funnel (13) and is further transported by a gas (24).

## Revendications

1. Procédé pour la préparation de poudres d'oxydes métalliques, selon lequel au cours d'une opération, on pulvérise le métal en fusion se présentant de préférence comme un jet de métal (15) et en même temps on oxyde les particules métalliques formées, procédé caractérisé en ce qu'on utilise de l'oxygène liquide ou un mélange liquide d'oxygène.

2. Procédé selon la revendication 1, caractérisé en ce que l'oxygène est pulvérisé par une ou plusieurs buses (17) dirigées contre le jet de métal (15), sous une pression supérieure à 5 bars, et le jet d'oxygène (30) sortant d'une buse (17) fait avec le jet de métal (15) coulant verticalement de la chambre de fusion (16), un angle (18) inférieur à un angle droit.

3. Procédé selon la revendication 1 ou 2, caractérisé en ce que l'oxygène (20) est pulvérisé contre le jet de métal (15) sous une pression de 5 à 100 bars.

4. Procédé selon l'une des revendications 1 à 4 caractérisé en ce que la quantité d'oxygène correspond au moins à la quantité stoechiométrique nécessaire à l'oxydation.

5. Procédé selon l'une des revendications 1 à 4, caractérisé en ce que la chaleur dégagée par la réaction exothermique métal/oxygène O₂ est de préférence évacuée par un moyen de refroidissement à l'eau (21).

6. Procédé selon l'une des revendications 1 à 5, caractérisé en ce que la poudre d'oxyde métallique recueillie de préférence dans une trémie (13) est évacuée à l'aide d'un gaz (24).
